# EUROPEAN PATENT SPECIFICATION

(11) **EP 3 741 664 B1**
(45) Date of publication and mention of the grant of the patent: **11.02.2026**
(21) Application number: 20161931.9
(22) Date of filing: 14.12.2016
(51) Int. Cl.: B64C 11/16, B64C 11/18, B64C 11/20, B64C 11/22, B64C 11/24, B64C 11/26, B64C 27/467, B64C 27/473, B64C 39/02, F03D 1/06, B64C 27/46

(54) **PROPELLER BLADE TREATMENTS FOR SOUND CONTROL**
PROPELLERSCHAUFELBEHANDLUNGEN ZUR SCHALLSTEUERUNG
TRAITEMENTS DE PALE D'HÉLICE POUR CONTRÔLE SONORE

(30) Priority: 18.12.2015 US 201514975291; 18.12.2015 US 201514975209; 18.12.2015 US 201514975236; 18.12.2015 US 201514975265; 18.12.2015 US 201514975274; 18.12.2015 US 201514975249; 22.06.2016 US 201615189849; 22.06.2016 US 201615189861; 26.09.2016 US 201615276549
(43) Date of publication of application: 25.11.2020
(62) Divisional of application: 16822338.6
(73) Proprietor: Amazon Technologies, Inc., Seattle, WA 98108-1226 (US)
(72) Inventor: BECKMAN, Brian C., Seattle, WA 98109-5210 (US); KIMCHI, Gur, Seattle, WA 98109-5210 (US); KO, Allan, Seattle, WA 98109-5210 (US); CORALIC, Vedran, Seattle, WA 98109-5210 (US); BUNECI, Emilia Sorana, Seattle, WA 98109-5210 (US)
(74) Representative: D Young & Co LLP

(56) References cited:
- EP-A1- 2 774 843
- WO-A1-2012/110267
- US-A- 2 071 012
- US-A1- 2008 286 110
- US-A1- 2012 027 590
- US-A1- 2013 323 098

## Description

### BACKGROUND

Vehicle traffic around residential areas continues to increase. Historically, vehicle traffic around homes and neighborhoods was primarily limited to automobile traffic. However, the recent development of aerial vehicles, such as unmanned aerial vehicles, has resulted in a rise of other forms of vehicle traffic. For example, hobbyists may fly unmanned aerial vehicles in and around neighborhoods, often within a few feet of a home. Likewise, there is discussion of electronic-commerce retailers, and other entities, delivering items directly to a user's home using unmanned aerial vehicles. As a result, such vehicles may be invited to navigate into a backyard, near a front porch, balcony, patio, and/or other locations around the residence to complete delivery of packages.
US 2013/323098 A1 discloses an axial flow blower with a plurality of blades, wherein a negative pressure surface of a leading edge of each blade is provided with a plurality of triangle shape projections which have vertexes along the leading edge, and a positive pressure surface of the leading edge of each blade is not provided with said triangle shape projections but is a smooth continuous surface. US 2012/027590 A1 discloses a rotor blade for a wind turbine. The rotor blade has surfaces defining a pressure side, a suction side, a leading edge, and a trailing edge extending between a tip and a root. The rotor blade assembly further includes a noise reducer configured on a surface of the rotor blade, the noise reducer including a plurality of noise reduction features. US2008/286110 A1 discloses low-noise wind turbine blades that comprise materials acting as an acoustic liner.

### BRIEF DESCRIPTION OF THE DRAWINGS

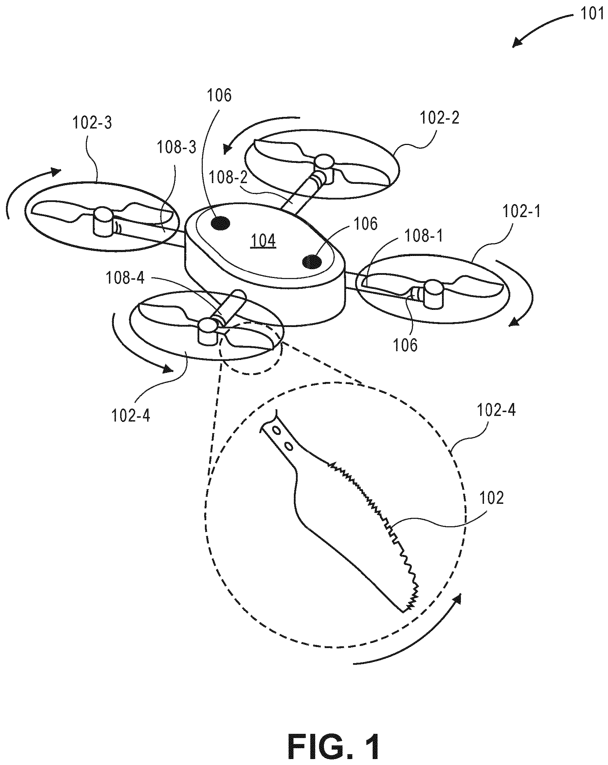

FIG. 1 is a view of an aerial vehicle, according to an implementation.

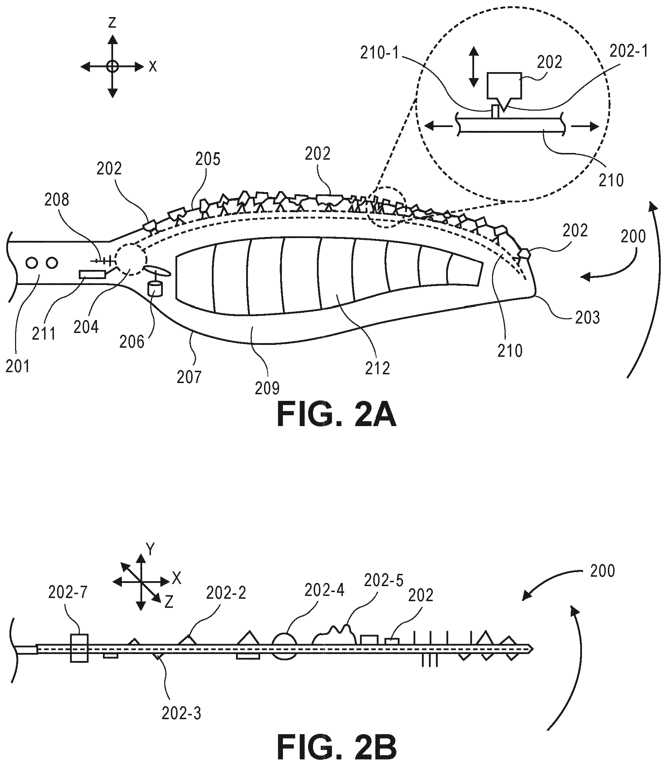

FIG. 2A is a top-down view of a propeller blade with propeller blade treatments, according to an implementation.
FIG. 2B is a side-view of a propeller blade with propeller blade treatments, which is not within the scope of the claims.

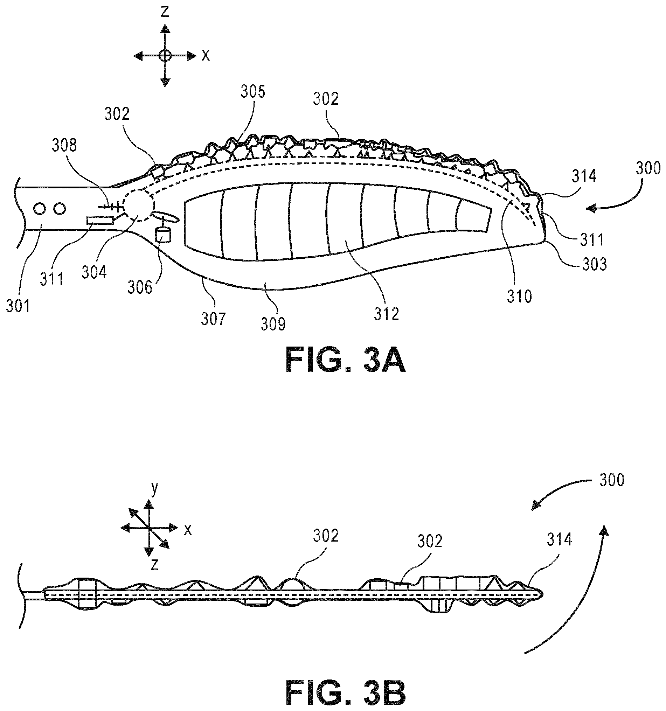

FIG. 3A is a top-down view of a propeller blade with propeller blade treatments, which is not within the scope of the claims.
FIG. 3B is a side-view of a propeller blade with propeller blade treatments, which is not within the scope of the claims.

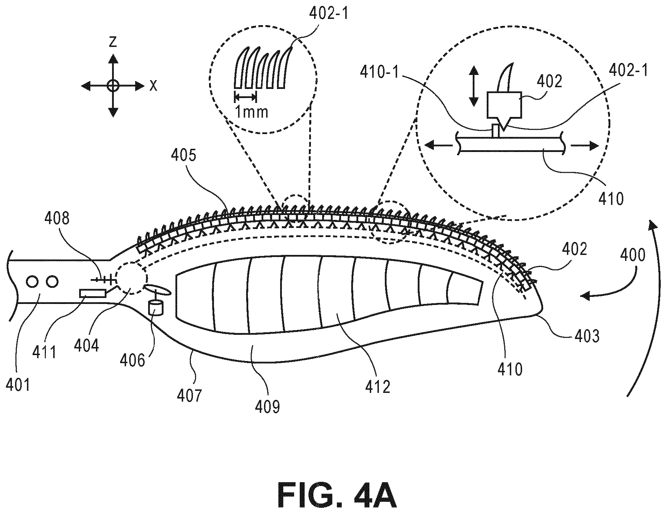

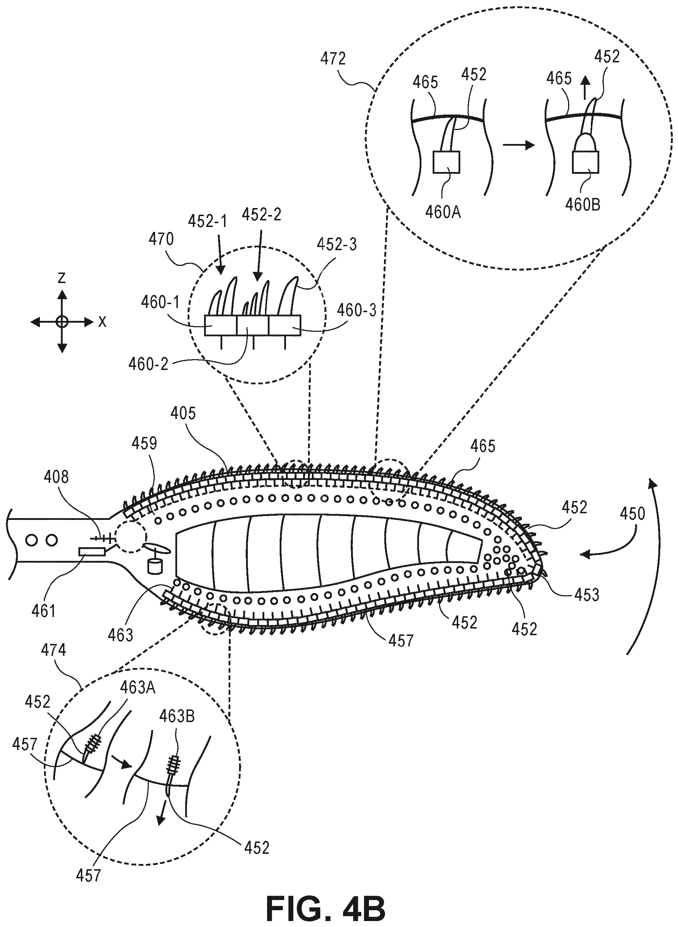

FIGS. 4A - 4B are top-down views of a propeller blade with propeller blade treatments, which is not within the scope of the claims.

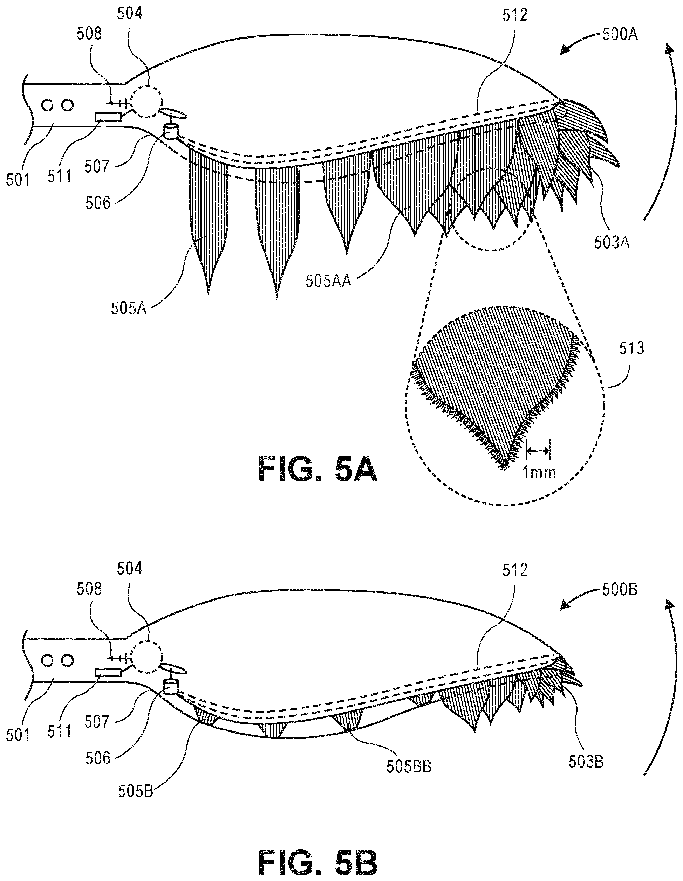

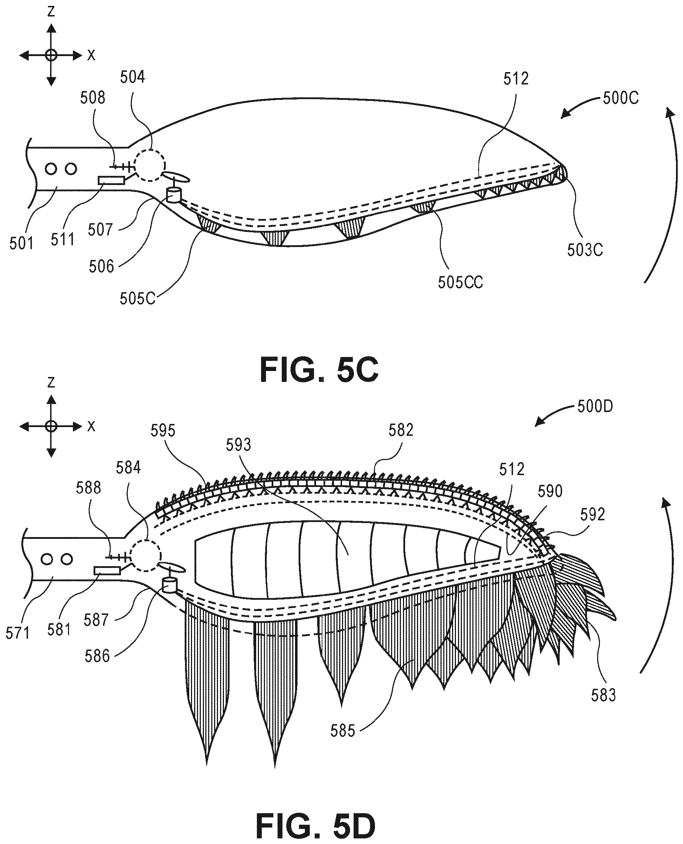

FIGS. 5A - 5D are top-down views of a propeller blade with propeller blade treatments, which is not within the scope of the claims.

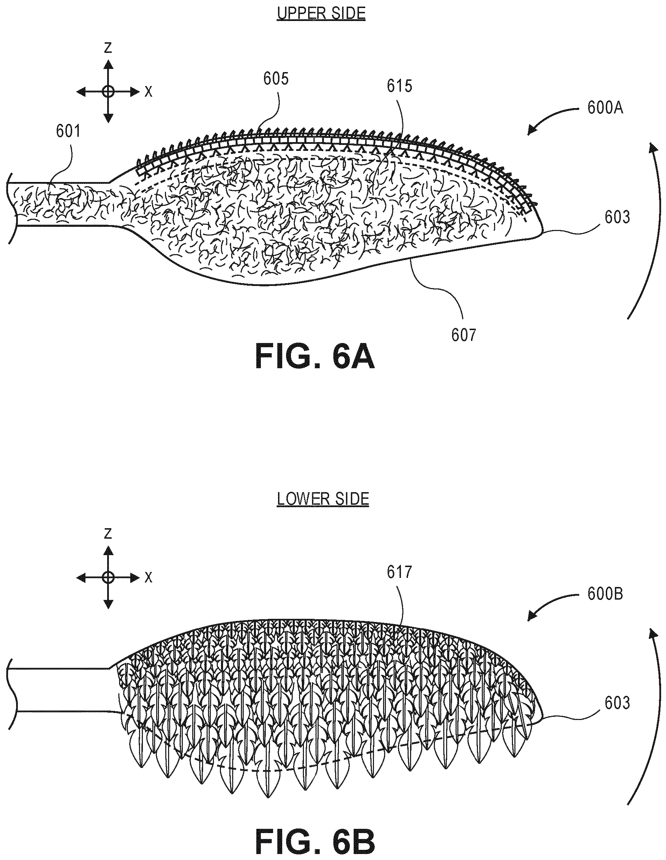

FIG. 6A is a top-down view of a propeller blade with propeller blade treatments.
FIG. 6B is a view of a lower or underneath side of a propeller blade with propeller blade treatments.

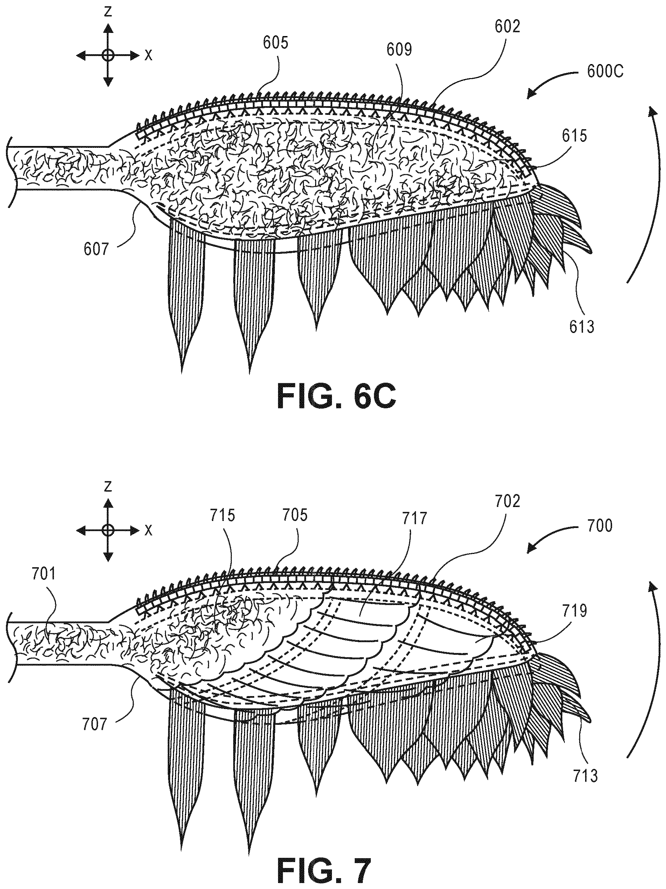

FIG. 6C is a top-down view of a propeller blade with propeller blade treatments.
FIG. 7 is a top-down view of a propeller blade with propeller blade treatments, which is not within the scope of the claims.

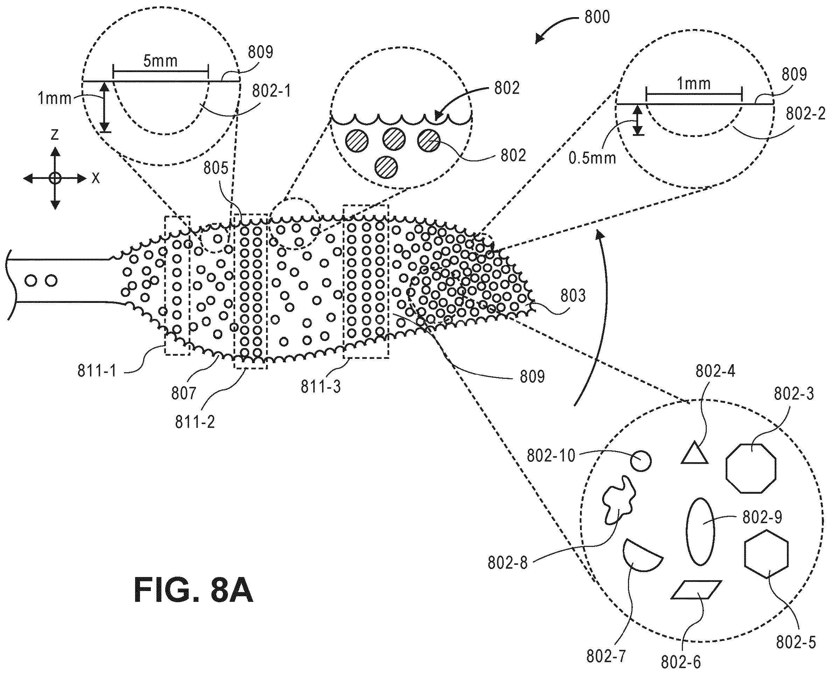

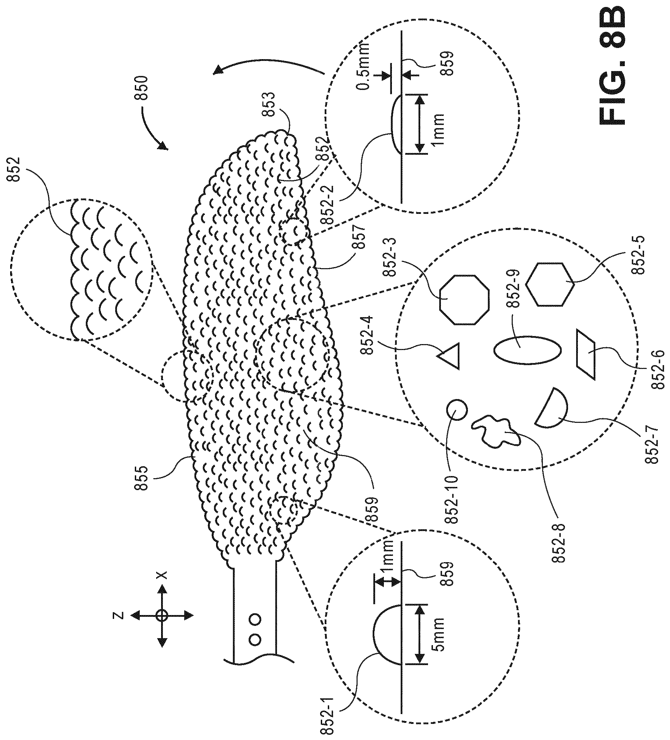

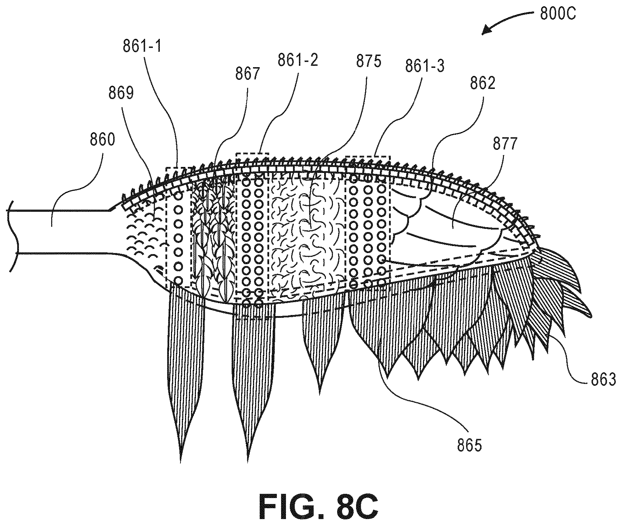

FIGS. 8A - 8C are top-down views of a propeller blade with propeller blade treatments, which is not within the scope of the claims.

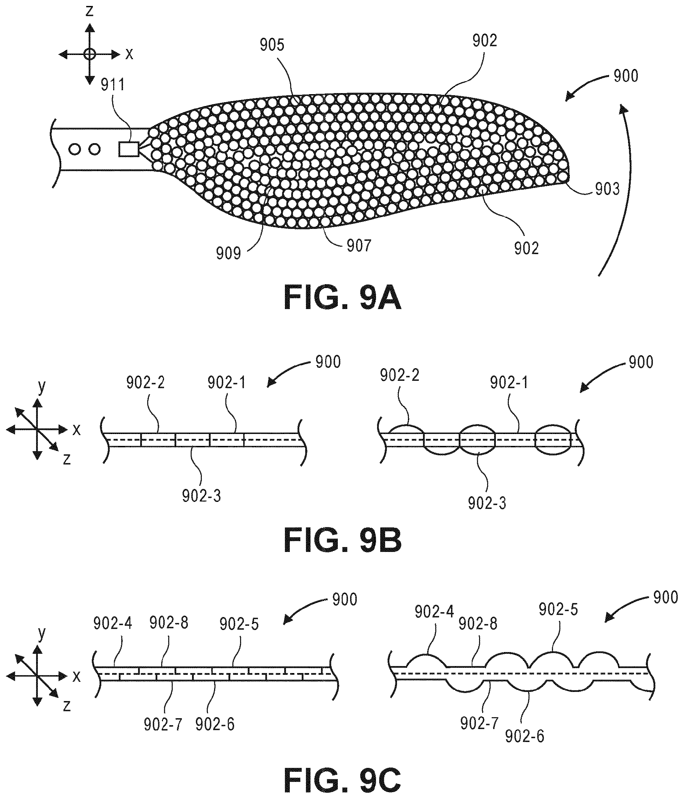

FIG. 9A is a top-down view of a propeller blade with propeller blade treatments, which is not within the scope of the claims.
FIGS. 9B - 9C are side-views of a propeller blade with propeller blade treatments, which is not within the scope of the claims.

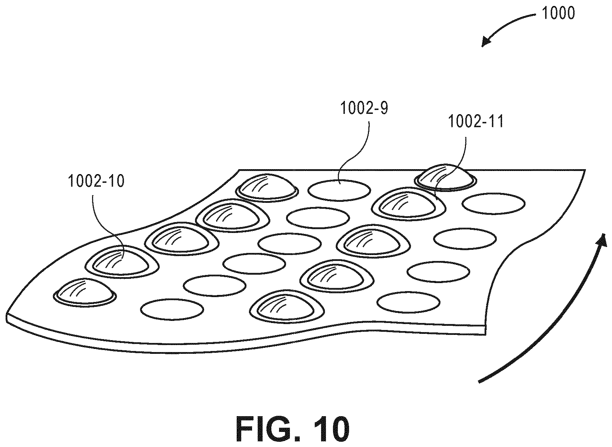

FIG. 10 is another view of a propeller blade with propeller blade treatments, which is not within the scope of the claims.

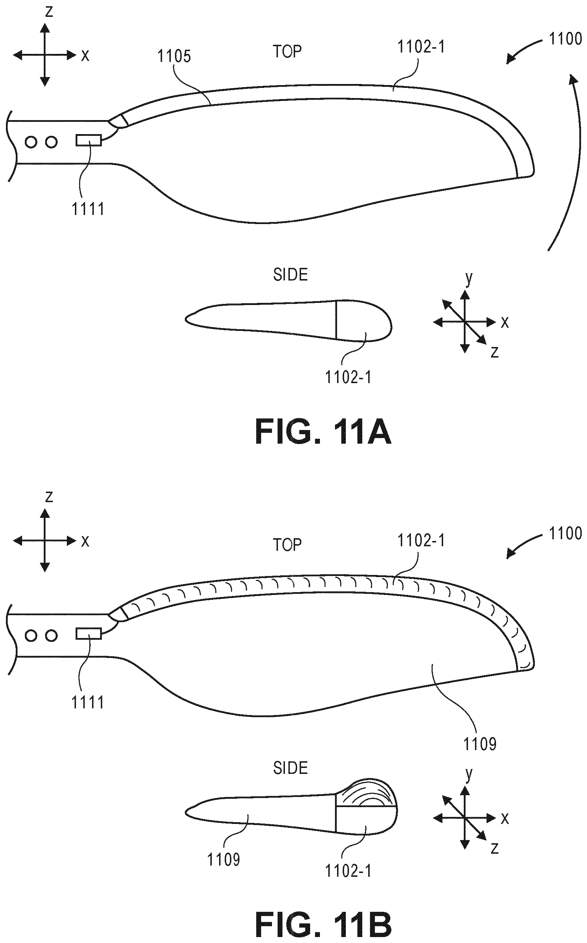

FIG. 11A is a top-down and side-view of a propeller blade with propeller blade treatments, which is not within the scope of the claims.
FIG. 11B is a top-down and side-view of a propeller blade with propeller blade treatments, which is not within the scope of the claims.

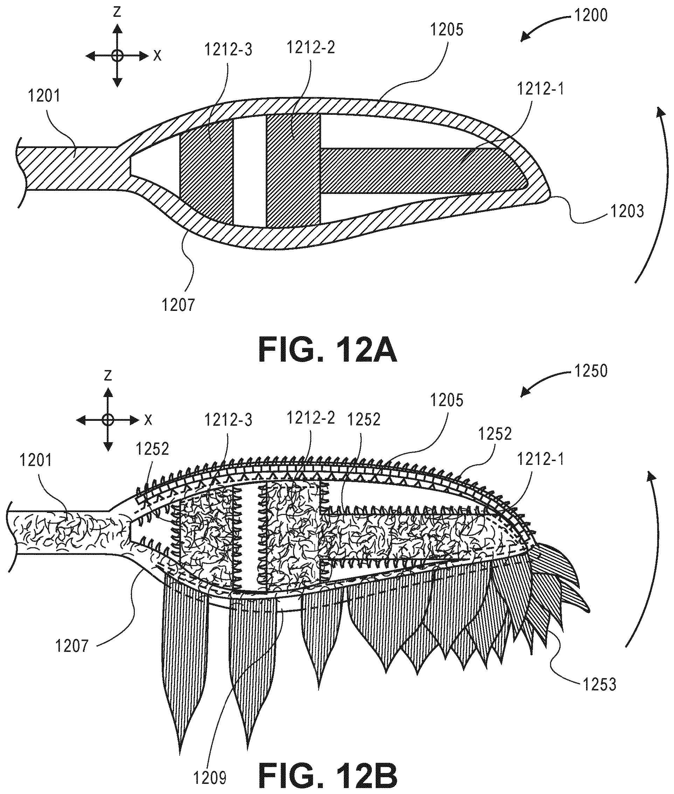

FIGS. 12A - 12B are top-down views of a propeller blade, which is not within the scope of the claims.

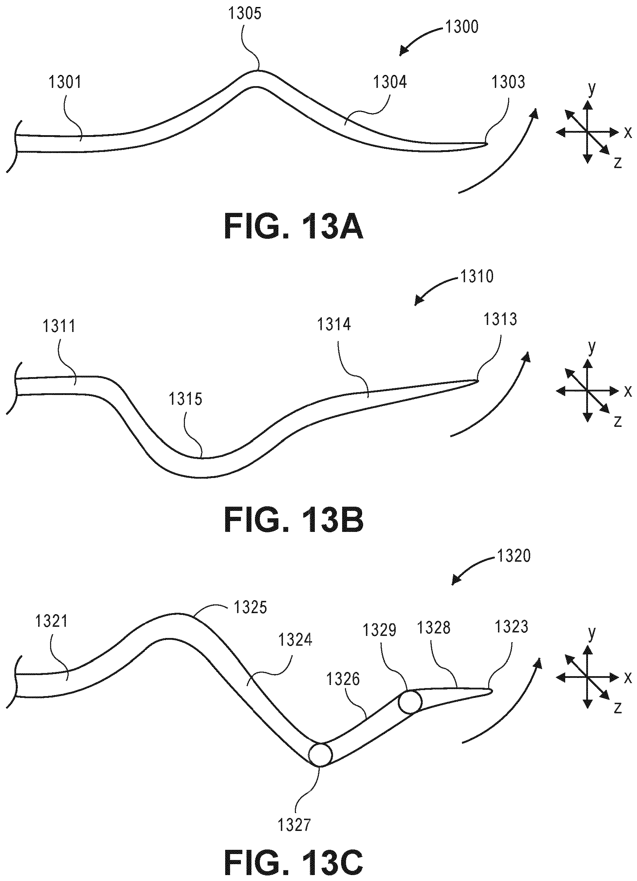

FIGS. 13A - 13C are side-views of a propeller blade, which is not within the scope of the claims.

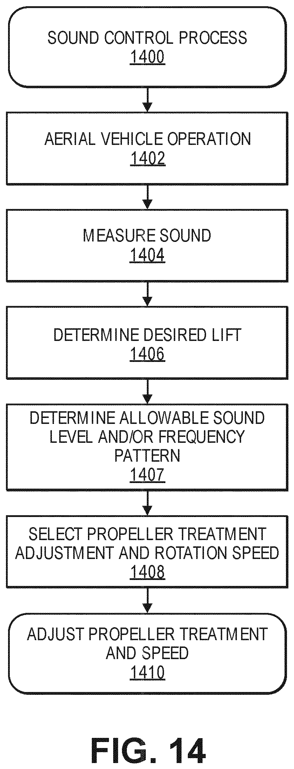

FIG. 14 is a flow diagram of a sound control process, which is not within the scope of the claims.

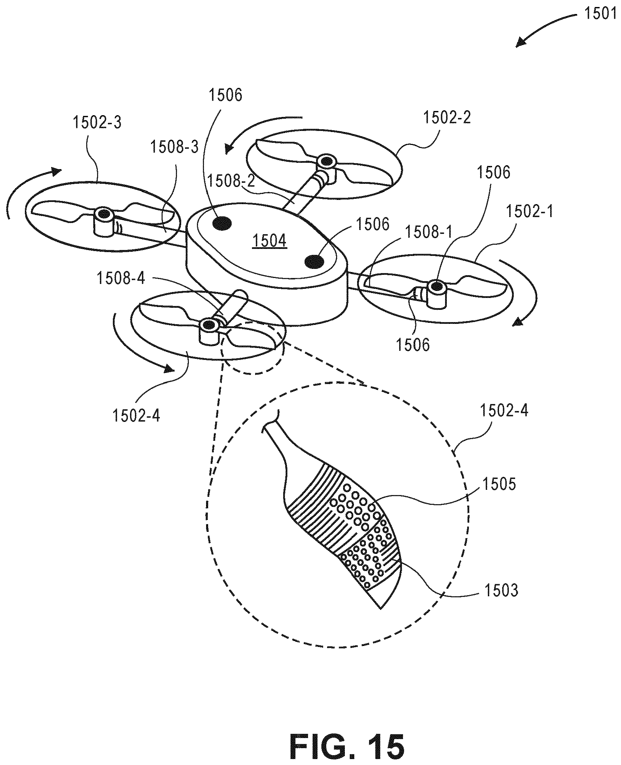

FIG. 15 is a view of an aerial vehicle, which is not within the scope of the claims.

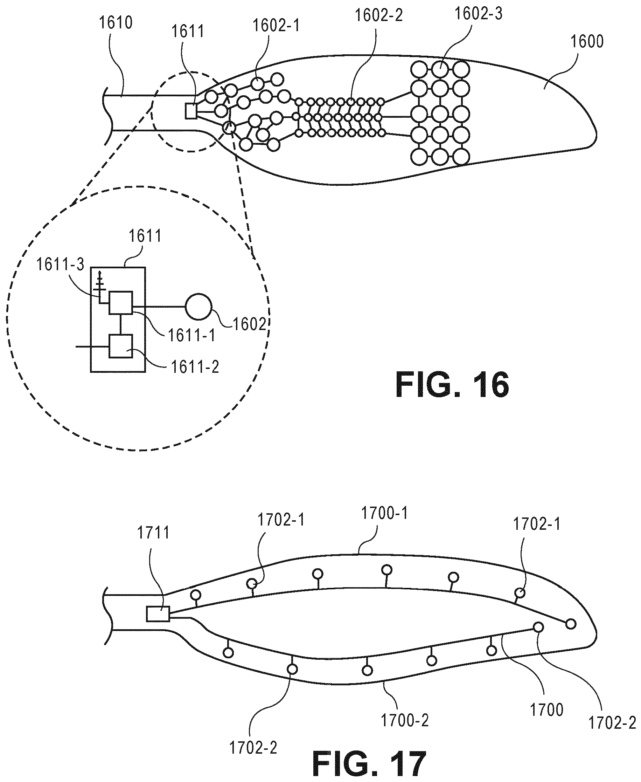

FIG. 16 is a view of a propeller blade with piezoelectric transducers, which is not within the scope of the claims.
FIG. 17 is another view of a propeller blade with piezoelectric transducers, which is not within the scope of the claims.

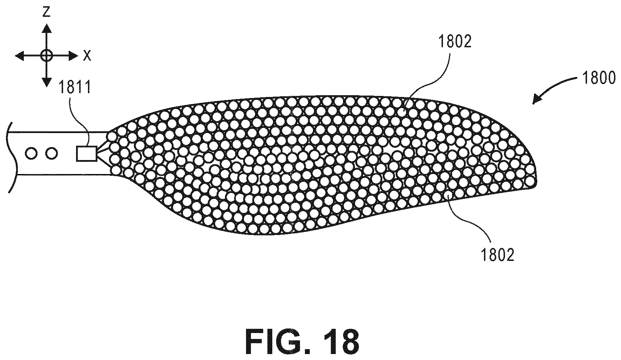

FIG. 18 is another view of a propeller blade with piezoelectric transducers, which is not within the scope of the claims.

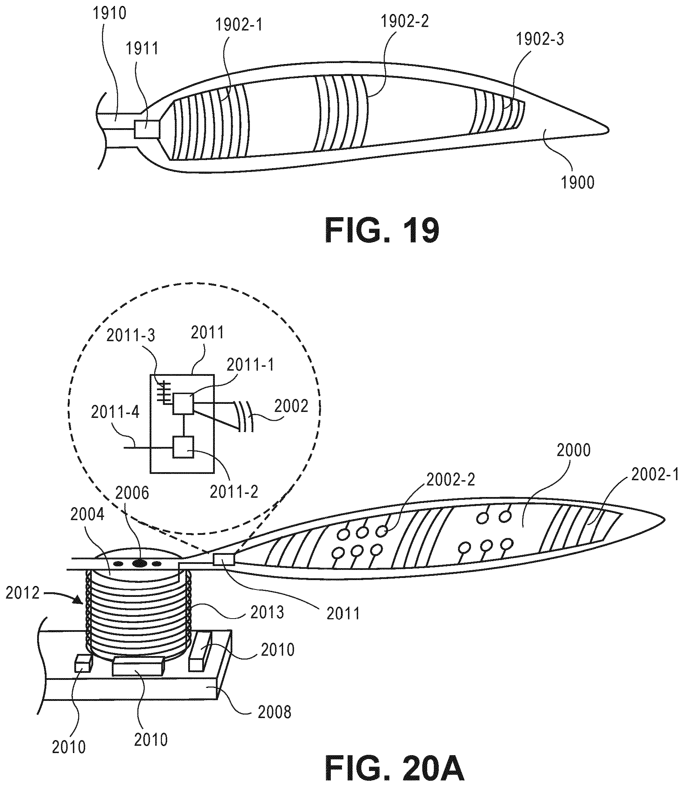

FIG. 19 is a view of a propeller blade with carbon nanotube which is not within the scope of the claims.

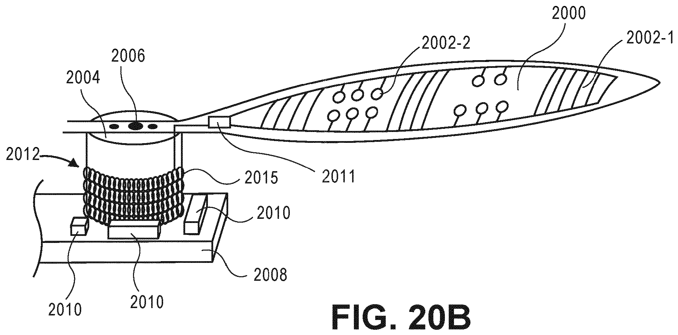

FIGS. 20A and 20B are views of a motor, a propeller blade with transducers, and a power source, which is not within the scope of the claims.

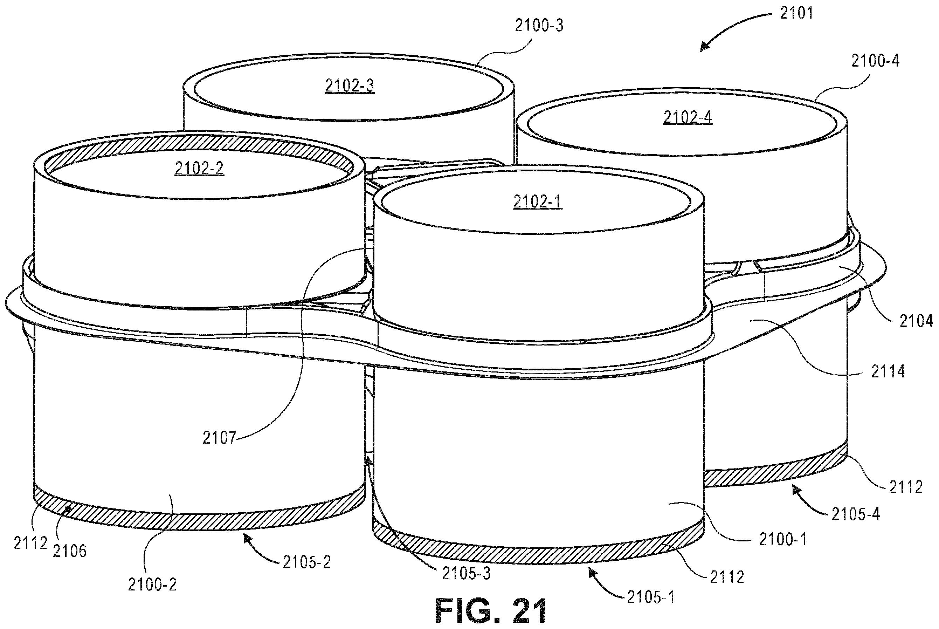

FIG. 21 is a view of an aerial vehicle with ducted propellers, the ducts including transducers, which is not within the scope of the claims.

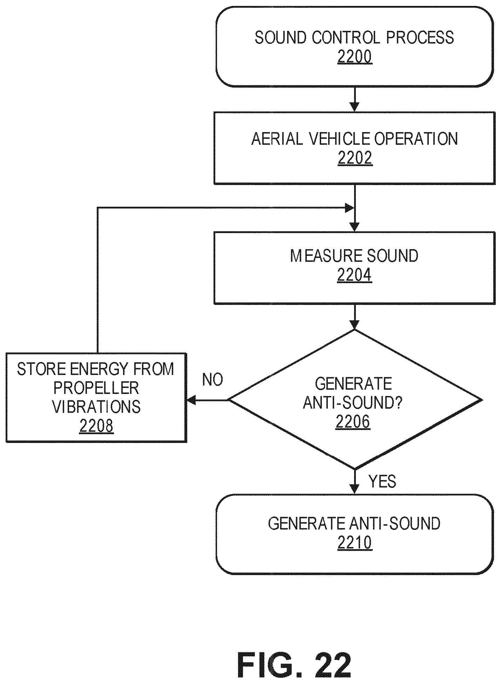

FIG. 22 is a flow diagram of a sound control process, which is not within the scope of the claims.

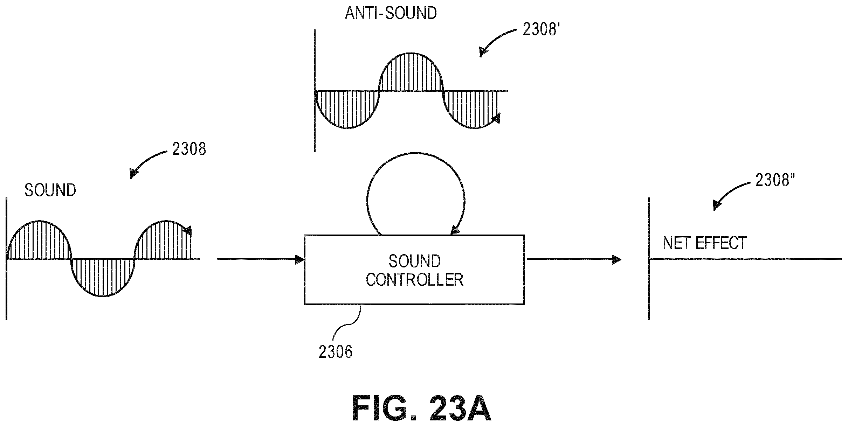

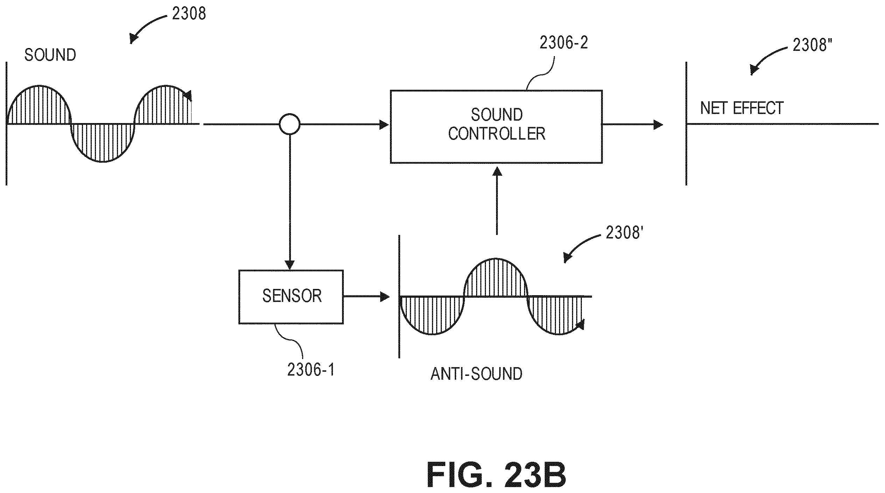

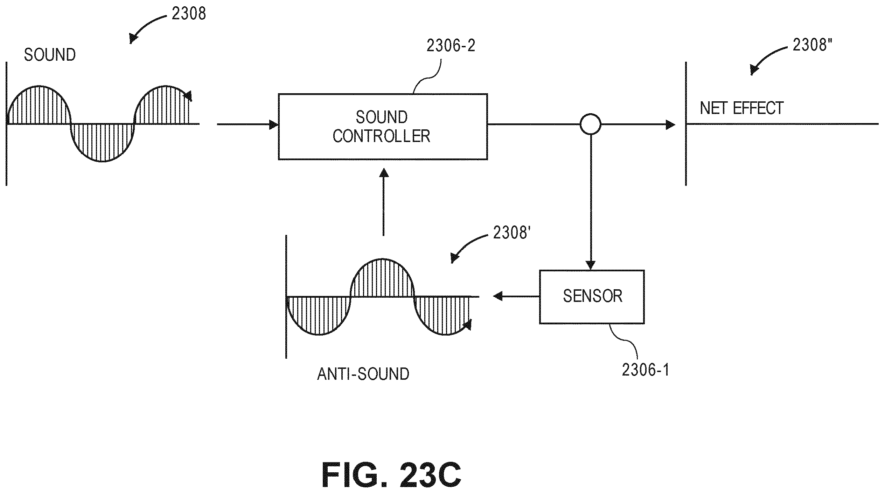

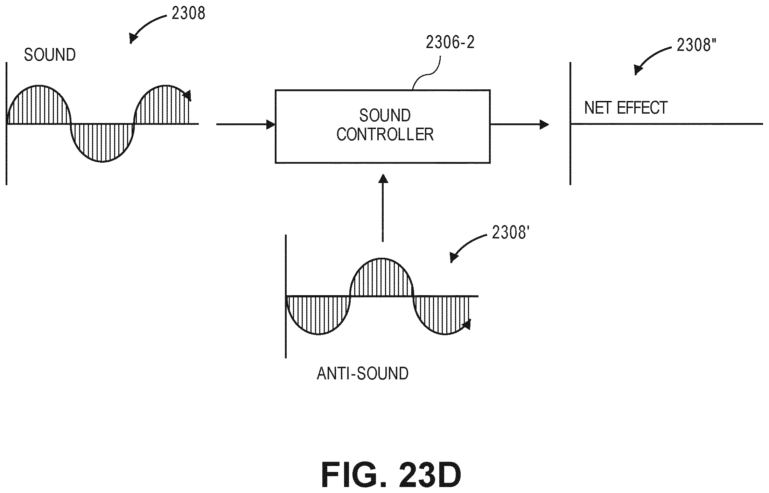

FIGS. 23A - 23D are block diagrams illustrating active airborne sound control, which is not within the scope of the claims.

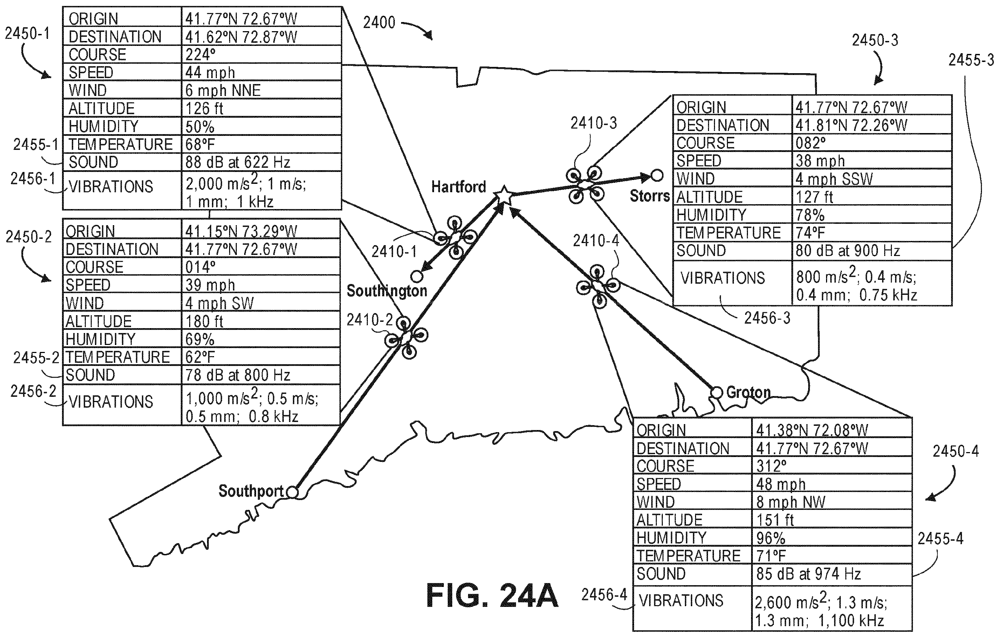

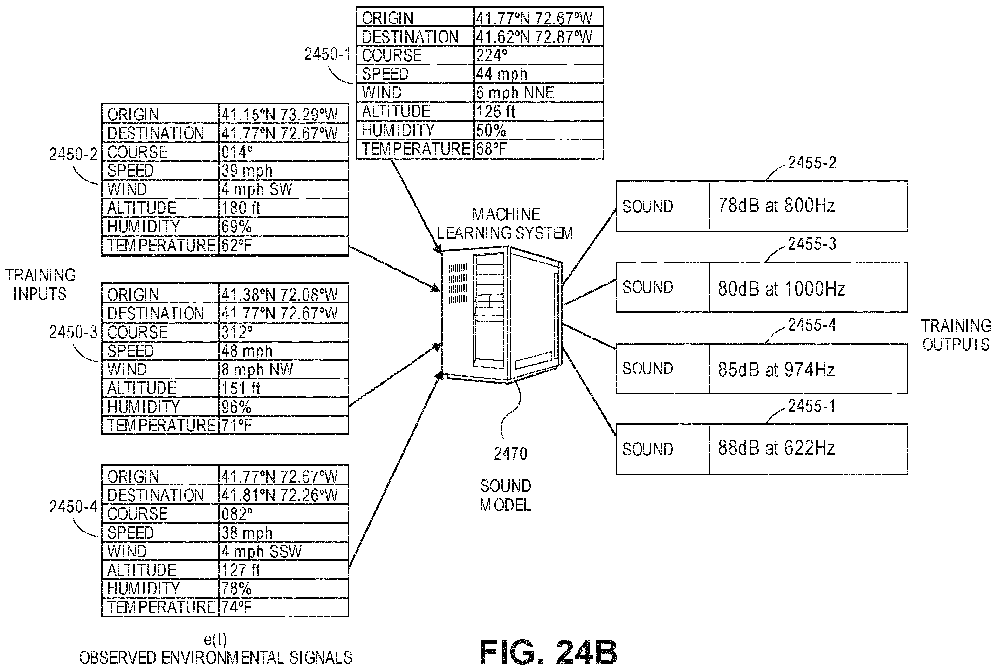

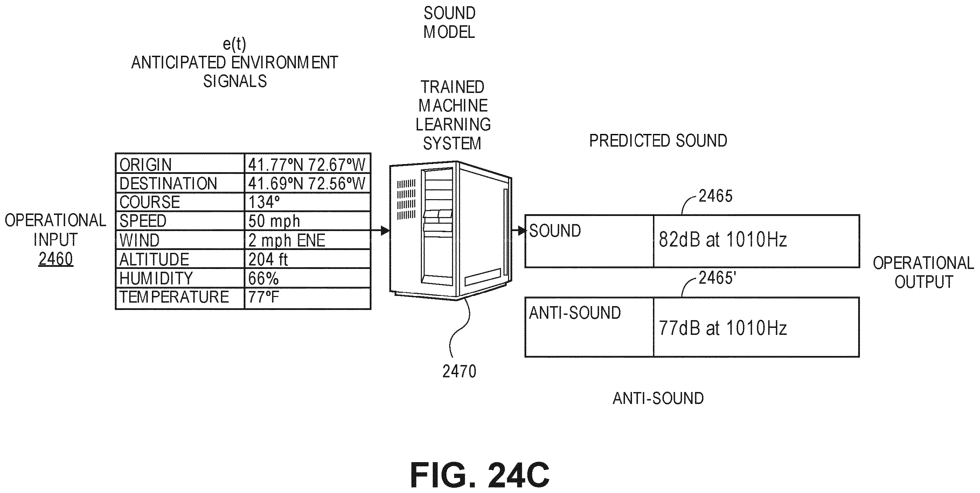

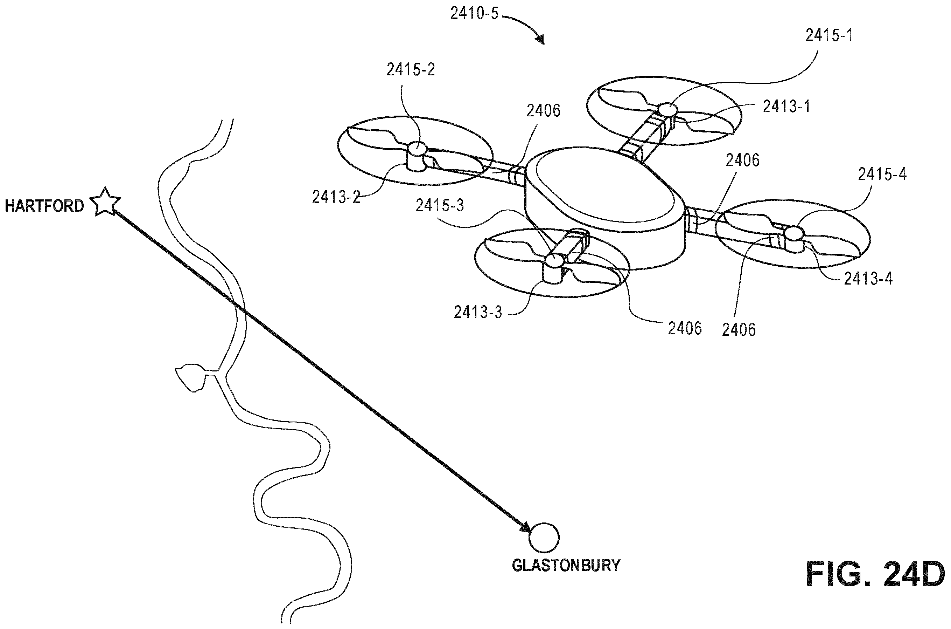

FIGS. 24A - 24D are views of aspects of one system for active airborne sound control, which is not within the scope of the claims.

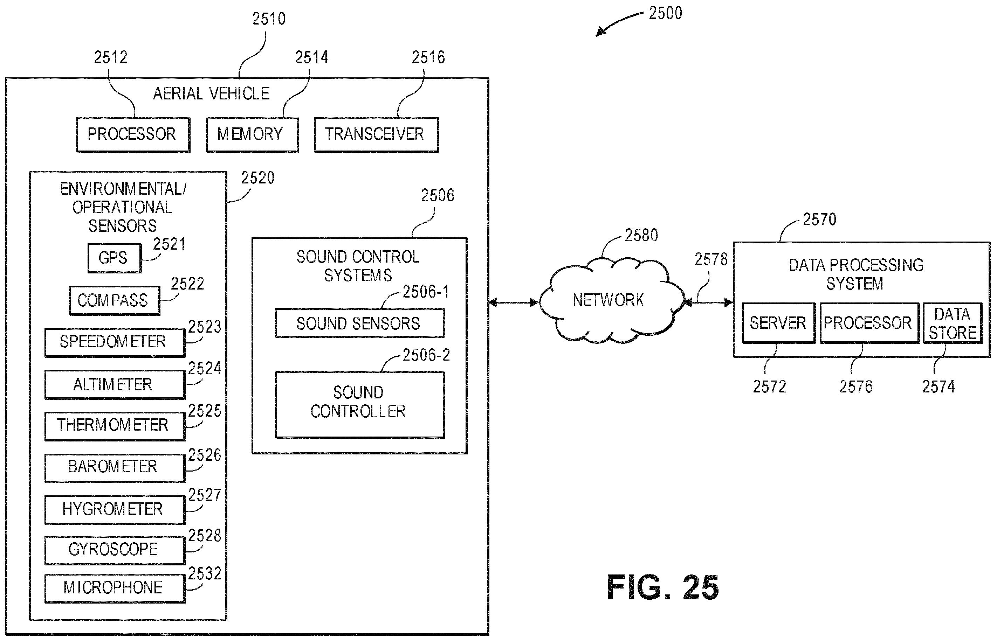

FIG. 25 is a block diagram of one system for active airborne sound control, which is not within the scope of the claims.

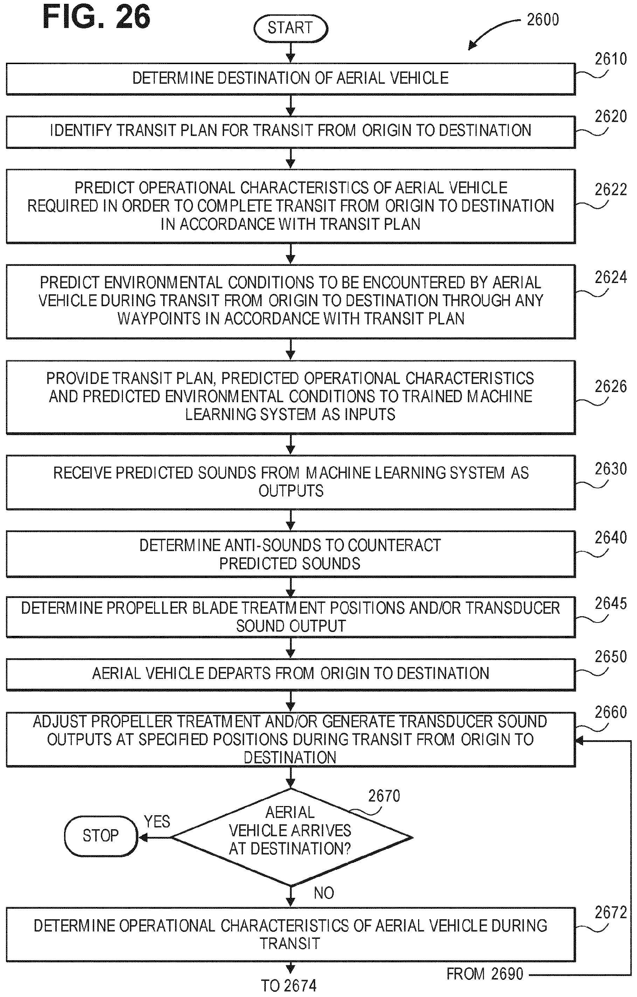

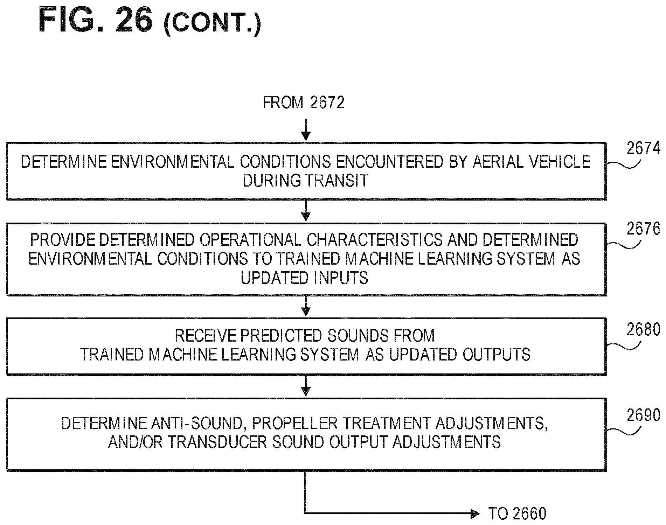

FIG. 26 is a flow diagram illustrating an example process for active airborne sound control, which is not within the scope of the claims.

### DETAILED DESCRIPTION

The present disclosure is directed to controlling, reducing, and/or altering sound generated by an aerial vehicle, such as an unmanned aerial vehicle ("UAV"), while the aerial vehicle is airborne. One or more propellers of the aerial vehicle include propeller blade treatments that alter the sound generated by the propeller. The propeller blade treatments may disrupt the airflow around the propeller blades as they rotate and/or absorb sound generated by the propeller blade as it rotates. By using propellers with different propeller blade treatments on the same aerial vehicle, the propellers may generate sounds that destructively interfere with each other, thereby reducing or altering the overall sound generated by the aerial vehicle. Likewise, some of the propeller blade treatments, in addition to altering the sound, reduce and/or otherwise alter the total sound generated by a propeller.

The invention is directed to a propeller blade according to claim 1. A propeller blade includes propeller blade treatments along one or more portions of the surface area of the propeller blade. The propeller blade also includes propeller blade treatments along the leading edge of the propeller blade.

The propeller blade treatments may be of any variety of sizes and/or shapes, and may extend from or conform to the propeller blade in a variety of manners. For example, some propeller blade treatments may extend from the propeller blade in a direction that includes a vertical component and/or a horizontal component with respect to the surface area of the propeller blade. Alternatively, or in addition thereto, some of the propeller blade treatments may extend into the propeller blade. In some implementations, some or all of the propeller blade treatments may be moved or activated while the propeller is rotating. The propeller includes a sound controller that retracts and/or extends one or more of the propeller blade treatments. When one or more propeller blade treatments are moved, the sound generated by the rotating propeller is altered. Propeller blade treatments that may be moved (e.g., retracted, extended, shifted, or rotated) are sometimes referred to herein as active propeller blade treatments. A sound controller may also be referred to herein as a propeller blade treatment adjustment controller.

In some implementations, one or more sensors may be positioned on the aerial vehicle that measure sound generated by or around the aerial vehicle. Based on the measured sound, the position of the one or more of the propeller blade treatments of a propeller blade on the aerial vehicle may be altered to generate an anti-sound that, when combined with the sound generated by the aerial vehicle, alters the sound generated by the aerial vehicle. For example, a processor of the aerial vehicle may maintain information relating to the different sounds generated by different propeller blade treatment positions. Based on the measured sound and the desired rotational speed of the propeller, propeller blade treatment positions are selected that will result in the propeller generating an anti-sound as it rotates that will cancel out, reduce, and/or otherwise alter the measured sound when the propeller is rotating at the desired rotational speed.

In another example, some propeller blade treatments, rather than being designed to generate a specific anti-sound, may dampen, reduce, and/or otherwise alter the sound generated by the propeller blade as it rotates. For example, the propeller blade may include fringes (a type of propeller blade treatment) that can be retracted or extended from the trailing edge of the propeller blade. When the fringes are extended, the fringes alter the airflow and dampen, reduce, and/or otherwise alter the sound generated by the propeller blade as the propeller passes through the air.

An air vehicle is also defined according to claim 9.

A propeller blade includes one or more of a hub, a tip, a surface area that extends between the hub and the tip, the surface area having an upper side, a lower side, a leading edge, and a trailing edge, and a sound dampening material affixed to at least a portion of the surface area of the propeller blade.

Optionally, a first sound dampening material may be affixed to the upper side, and a second sound dampening material may be affixed to the lower side. The propeller blade includes a plurality of serrations positioned along the leading edge of the propeller blade configured to disrupt air passing the propeller blade, and the sound dampening material is configured to absorb at least a portion of a sound generated by the disrupted air. The propeller blade further includes a controller configured to alter a position of a first serration of the plurality of serrations from a first position to a second position. Likewise, the propeller blade generates a first sound when rotating and the first serration is in the first position and generates a second sound when rotating and the serration is in the second position. The controller includes a communication component configured to receive a wireless communication that indicates whether the first serration is to be in the first position or the second position. The propeller blade also includes an actuator in contact with the first serration and configured to move the first serration from the first position to the second position based at least in part on the indication included in the wireless communication. The propeller blade also includes a power supply included in the propeller blade and configured to provide power to the actuator. Optionally, at least some of the plurality of serrations may vary in shape and size. Optionally, the sound dampening material may vary over at least a portion of the surface area of the propeller blade. Optionally, the propeller blade may also include a flexible fringe extending from the trailing edge that is configured to disrupt airflow. Optionally, the flexible fringe may be formed of at least one of an elastic material, a rigid material, a carbon composite material, a ceramic material, a porous material, a fabric material, a feather, a fibrous material, a leather material, a fur material, a synthetic material, or a fibrous material.

Implementations disclosed herein include an aerial vehicle including a motor configured to rotate a propeller such that the propeller generates a lifting force. The propeller includes a hub that is coupled to the motor so that the motor can rotate the propeller, and a propeller blade extending from the hub.

Although the disclosure has been described herein using exemplary techniques, components, and/or processes for implementing the systems and methods of the present disclosure, it should be understood by those skilled in the art that other techniques, components, and/or processes or other combinations and sequences of the techniques, components, and/or processes described herein may be used or performed that achieve the same function(s) and/or result(s) described herein and which are included within the scope of the present disclosure.

For example, although some of the implementations disclosed herein reference the use of unmanned aerial vehicles to deliver payloads from warehouses or other like facilities to customers, those of ordinary skill in the pertinent arts will recognize that the systems and methods disclosed herein are not so limited, and may be utilized in connection with any type or form of aerial vehicle (e.g., manned or unmanned) having fixed or rotating wings for any intended industrial, commercial, recreational or other use.

It should be understood that, unless otherwise explicitly or implicitly indicated herein, any of the features, characteristics, alternatives or modifications described regarding a particular implementation herein may also be applied, used, or incorporated with any other implementation described herein, and that the drawings and detailed description of the present disclosure are intended to cover all modifications, equivalents and alternatives to the various implementations as defined by the appended claims. Also, the drawings herein are not drawn to scale.

Conditional language, such as, among others, "can," "could," "might," or "may," unless specifically stated otherwise, or otherwise understood within the context as used, is generally intended to convey in a permissive manner that certain implementations could include, or have the potential to include, but do not mandate or require, certain features, elements and/or steps. In a similar manner, terms such as "include," "including" and "includes" are generally intended to mean "including, but not limited to." Thus, such conditional language is not generally intended to imply that features, elements and/or steps are in any way required for one or more implementations or that one or more implementations necessarily include logic for deciding, with or without user input or prompting, whether these features, elements and/or steps are included or are to be performed in any particular implementation.

Disjunctive language, such as the phrase "at least one of X, Y, or Z," or "at least one of X, Y and Z," unless specifically stated otherwise, is otherwise understood with the context as used in general to present that an item, term, etc., may be either X, Y, or Z, or any combination thereof (e.g., X, Y, and/or Z). Thus, such disjunctive language is not generally intended to, and should not, imply that certain implementations require at least one of X, at least one of Y, or at least one of Z to each be present.

Unless otherwise explicitly stated, articles such as "a" or "an" should generally be interpreted to include one or more described items. Accordingly, phrases such as "a device configured to" are intended to include one or more recited devices. Such one or more recited devices can also be collectively configured to carry out the stated recitations. For example, "a processor configured to carry out recitations A, B and C" can include a first processor configured to carry out recitation A working in conjunction with a second processor configured to carry out recitations B and C.

Language of degree used herein, such as the terms "about," "approximately," "generally," "nearly" or "substantially," as used herein, represent a value, amount, or characteristic close to the stated value, amount, or characteristic that still performs a desired function or achieves a desired result. For example, the terms "about," "approximately," "generally," "nearly" or "substantially" may refer to an amount that is within less than 10% of, within less than 5% of, within less than 1% of, within less than 0.1% of, and within less than 0.01% of the stated amount.

Although the invention has been described and illustrated with respect to illustrative implementations thereof, the foregoing and various other additions and omissions may be made therein and thereto without departing from the scope of the present disclosure as defined by the appended claims.

## Claims

1. A propeller blade, comprising:
a hub (601);
a tip (603);
a surface area that extends between the hub and the tip, the surface area having an upper side (600A), a lower side (600B), a leading edge (605), and a trailing edge (607);
a sound dampening material (615, 617) affixed to at least a portion of the surface area of the propeller blade; and
a plurality of serrations (602) positioned along the leading edge of the propeller blade configured to disrupt air passing the propeller blade;
wherein the sound dampening material is configured to absorb at least a portion of a sound generated by the disrupted air, the propeller blade further comprising:
a controller (211) configured to alter a position of a first serration of the plurality of serrations between a first position and a second position, wherein the propeller blade generates a first sound when rotating and the first serration is in the first position and generates a second sound when rotating and the first serration is in the second position, wherein the controller includes: a communication component configured to receive a wireless communication that indicates whether the first serration is to be in the first position or the second position; and an actuator (210) in contact with the first serration and configured to move the first serration between the first position and the second position based at least in part on the indication included in the wireless communication; and
a power supply included in the propeller blade and configured to provide power to the actuator.

2. The propeller blade of claim 1, wherein:
a first sound dampening material (615) is affixed to the upper side; and
a second sound dampening material (617) is affixed to the lower side.

3. The propeller blade of claim 1 or claim 2, wherein at least some of the plurality of serrations vary in shape and size.

4. The propeller blade of any preceding claim, wherein the sound dampening material varies over at least a portion of the surface area of the propeller blade.

5. The propeller blade of any preceding claim, further comprising: a flexible fringe (613) extending from the trailing edge and configured to disrupt airflow.

6. The propeller blade of claim 5, wherein the flexible fringe is formed of at least one of an elastic material, a carbon composite material, a ceramic material, a porous material, a fabric material, a feather, a fibrous material, a leather material, a fur material, a synthetic material, or a fibrous material.

7. The propeller blade of any preceding claim, wherein the sound dampening material covers the upper side of the propeller blade.

8. The propeller blade of any preceding claim, wherein the sound dampening material covers the lower side of the propeller blade.

9. An aerial vehicle comprising:
a motor configured to rotate a propeller such that the propeller generates a lifting force;
the propeller including:
a hub that is coupled to the motor so that the motor can rotate the propeller;
a propeller blade extending from the hub, the propeller blade according to any preceding claim.

## Patentansprüche

1. Propellerblatt, umfassend:
eine Nabe (601);
eine Spitze (603);
einen Oberflächenbereich, der sich zwischen der Nabe und der Spitze erstreckt, wobei der Oberflächenbereich eine obere Seite (600A), eine untere Seite (600B), eine Vorderkante (605) und eine Hinterkante (607) aufweist;
ein klangdämpfendes Material (615, 617), das an zumindest einem Teil des Oberflächenbereichs des Propellerblatts befestigt ist; und
eine Vielzahl von Zahnungen (602), die entlang der Vorderkante des Propellerblatts angeordnet sind und dazu ausgelegt sind, die das Propellerblatt passierende Luft zu stören;
wobei das klangdämpfende Material dazu ausgelegt ist, zumindest einen Teil des durch die gestörte Luft erzeugten Klangs zu absorbieren, wobei das Propellerblatt ferner umfasst:
eine Steuerung (211), die dazu ausgelegt ist, eine Position einer ersten Zahnung der Vielzahl von Zahnungen zwischen einer ersten Position und einer zweiten Position zu verändern, wobei das Propellerblatt beim Drehen einen ersten Klang erzeugt, wenn sich die erste Zahnung in der ersten Position befindet, und beim Drehen einen zweiten Klang erzeugt, wenn sich die erste Zahnung in der zweiten Position befindet, wobei die Steuerung umfasst: eine Kommunikationskomponente, die dazu ausgelegt ist, eine drahtlose Kommunikation zu empfangen, die angibt, ob sich die erste Zahnung in der ersten Position oder in der zweiten Position befinden soll; und einen Aktuator (210), der mit der ersten Zahnung in Kontakt steht und dazu ausgelegt ist, zumindest teilweise auf Grundlage der in der drahtlosen Kommunikation enthaltenen Angabe die erste Zahnung zwischen der ersten Position und der zweiten Position zu bewegen; und
eine in dem Propellerblatt enthaltene Leistungsversorgung, die dazu ausgelegt ist, den Aktuator mit Leistung zu versorgen.

2. Propellerblatt nach Anspruch 1, wobei:
ein erstes klangdämpfendes Material (615) an der oberen Seite befestigt ist; und
ein zweites klangdämpfendes Material (617) an der unteren Seite befestigt ist.

3. Propellerblatt nach Anspruch 1 oder Anspruch 2, wobei zumindest einige der Vielzahl von Zahnungen in Form und Größe variieren.

4. Propellerblatt nach einem der vorhergehenden Ansprüche, wobei das klangdämpfende Material über zumindest einen Teil des Oberflächenbereichs des Propellerblatts variiert.

5. Propellerblatt nach einem der vorhergehenden Ansprüche, ferner umfassend:
eine flexible Fransung (613), die sich von der Hinterkante erstreckt und dazu ausgelegt ist, den Luftstrom zu stören.

6. Propellerblatt nach Anspruch 5, wobei die flexible Fransung aus mindestens einem eines elastischen Materials, eines Kohlenstoffverbundmaterials, eines Keramikmaterials, eines porösen Materials, eines Gewebematerials, einer Feder, eines Fasermaterials, eines Ledermaterials, eines Fellmaterials, eines synthetischen Materials oder eines Fasermaterials gebildet ist.

7. Propellerblatt nach einem der vorhergehenden Ansprüche, wobei das klangdämpfende Material die obere Seite des Propellerblatts bedeckt.

8. Propellerblatt nach einem der vorhergehenden Ansprüche, wobei das klangdämpfende Material die untere Seite des Propellerblatts bedeckt.

9. Luftfahrzeug, umfassend:
einen Motor, der dazu ausgelegt ist, einen Propeller so zu drehen, dass der Propeller eine Auftriebskraft erzeugt; wobei der Propeller umfasst:
eine Nabe, die mit dem Motor gekoppelt ist, sodass der Motor den Propeller drehen kann;
ein Propellerblatt, das sich von der Nabe erstreckt, wobei das Propellerblatt nach einem der vorhergehenden Ansprüche beschaffen ist.

## Revendications

1. Pale d'hélice, comprenant :
un moyeu (601) ;
une extrémité (603) ;
une zone de surface qui s'étend entre le moyeu et l'extrémité, la zone de surface présentant une face supérieure (600A), une face inférieure (600B), un bord d'attaque (605) et un bord de fuite (607) ;
un matériau insonorisant (615, 617) fixé à au moins une partie de la zone de surface de la pale d'hélice ; et
une pluralité de dentelures (602) placées le long du bord d'attaque de la pale d'hélice conçues pour perturber l'air passant par la pale d'hélice ;
dans laquelle le matériau insonorisant est conçu pour absorber au moins une partie d'un son généré par l'air perturbé, la pale d'hélice comprenant en outre :
un contrôleur (211) configuré pour modifier la position d'une première dentelure de la pluralité de dentelures entre une première position et une seconde position, la pale d'hélice générant un premier son lors de la rotation et lorsque la première dentelure se trouve dans la première position et générant un second son lors de la rotation et lorsque la première dentelure se trouve dans la seconde position, le contrôleur comprenant : un composant de communication configuré pour recevoir une communication sans fil qui indique si la première dentelure doit se trouver dans la première position ou dans la seconde position ; et un actionneur (210) en contact avec la première dentelure et configuré pour déplacer la première dentelure entre la première position et la seconde position sur la base au moins en partie de l'indication incluse dans la communication sans fil ; et
une alimentation électrique incluse dans la pale d'hélice et conçue pour fournir de l'énergie à l'actionneur.

2. Pale d'hélice selon la revendication 1, dans laquelle :
un premier matériau insonorisant (615) est fixé sur la face supérieure ; et
un second matériau insonorisant (617) est fixé sur la face inférieure.

3. Pale d'hélice selon la revendication 1 ou la revendication 2, dans laquelle au moins certaines de la pluralité de dentelures varient en forme et en taille.

4. Pale d'hélice selon l'une quelconque des revendications précédentes, dans laquelle le matériau insonorisant varie sur au moins une partie de la zone de surface de la pale d'hélice.

5. Pale d'hélice selon l'une quelconque des revendications précédentes, comprenant en outre :
une frange flexible (613) s'étendant à partir du bord de fuite et conçue pour perturber le flux d'air.

6. Pale d'hélice selon la revendication 5, dans laquelle la frange flexible est formée d'au moins l'un d'un matériau élastique, d'un matériau composite de carbone, d'un matériau céramique, d'un matériau poreux, d'un matériau de tissu, de plumes, d'un matériau fibreux, d'un matériau en cuir, d'un matériau en fourrure, d'un matériau synthétique ou d'un matériau fibreux.

7. Pale d'hélice selon l'une quelconque des revendications précédentes, dans laquelle le matériau insonorisant recouvre la face supérieure de la pale d'hélice.

8. Pale d'hélice selon l'une quelconque des revendications précédentes, dans laquelle le matériau insonorisant recouvre la face inférieure de la pale d'hélice.

9. Véhicule aérien, comprenant :
un moteur configuré pour faire tourner une hélice de façon que l'hélice génère une force de portance ;
l'hélice comprenant :
un moyeu qui est couplé au moteur de manière à ce que le moteur puisse faire tourner l'hélice ;
une pale d'hélice s'étendant à partir du moyeu, la pale d'hélice étant une pale d'hélice selon l'une quelconque des revendications précédentes.
